# EUROPEAN PATENT SPECIFICATION

(11) **EP 3 167 215 B1**
(45) Date of publication and mention of the grant of the patent: **27.10.2021**
(21) Application number: 15751067.8
(22) Date of filing: 06.07.2015
(51) Int. Cl.: F16K 31/06

(54) **IMPLEMENTATION SYSTEM FOR SLIDE SOLENOID VALVES**
IMPLEMENTIERUNGSSYSTEM FÜR VERSCHIEBBARE MAGNETVENTILE
SYSTÈME DE MISE EN OEUVRE POUR ÉLECTROVANNES À TIROIR

(30) Priority: 08.07.2014 IT MI20141249
(43) Date of publication of application: 17.05.2017
(73) Proprietor: Ode S.r.l., 23823 Colico (LC) (IT)
(72) Inventor: ROMERI, Roberto, I-23013 Cosio Valtellino (SO) (IT); IACOVONE, Bruno, I-23020 Dubino (SO) (IT)
(74) Representative: Riccardi, Sergio
(86) International application number: PCT/IB2015/001149
(87) International publication number: WO 2016/005809

(56) References cited:
- GB-A- 1 411 505
- US-A- 2 329 254
- US-A- 2 617 444
- US-A- 3 176 516
- US-A- 3 369 790
- US-A- 3 952 775
- None

## Description

The present invention relates to the solenoid valve field, more particularly the sector of interest relates to the slide solenoid valves.

It is well known that slide solenoid valves are used in most diversified sectors and extremely widespread in view of their high versatility of use. For instance, classic fields of use of slide solenoid valves are the chemical, petrochemical, pneumatic and general fluid control sectors.

An example of known implementation is the pneumatic sector, where said valves are used as actuators of industrial machinery or pneumatic plant controls. In this case the mostly used type is a three- or five-way servocontrolled slide solenoid valve.

In the chemical or petrochemical field these valves may for instance be used to convey fuel or to control petrochemical plants, and the valves for these functions even in this case are three- or five-way servocontrolled slide solenoid valves.

Moreover, in the fluid control field such as valves for water or liquid delivery, mostly used are three-way servocontrolled slide solenoid valves and normally closed or normally open directly controlled solenoid valves.

Therefore it is apparent that, despite the variable field of use, the standard configuration of the slide valves is generally the same, even if some modifications are made according to the technical sector.

Thus with particular reference to the slide valves of interest for the present invention, in view of the intrinsic nature of their operation, it is well known that these solenoid valves have substantial technical problems and limitations, such as the need to be actuated through a servo control. First of all, said servocontrol increases the overall dimensions of the solenoid valves, this causing a limitation of their use in a reduced space.

It is also well known to any man skilled in the art that for the actuation of a servo control, a pressurized control fluid is required, which may be either a proper independent fluid or the fluid processed by the valve. The requirement of using a command or pilot fluid ( it is to be noted that the pilot system may be either internal or external relative to the valve, as to the importance of this aspect) involves use either of a greater amount of fluid if this is the same processed one, or of another kind and quantity of fluid with consequent additional cost and possible waste.

Moreover said fluid, which indeed is often a liquid, has in its turn to be kept under pressure, and then discharged or recovered in the system, and also these operations are subject to relevant costs and waste and require auxiliary proper means such as channels, additional charge/discharge/recovery tanks, compressors for feeding the servo controls.

It is also to be noted that for actuation of said servo controlled slide valves, an inlet pressure different from 0 bar is required, in order that the opening and closing functions of the slider can achieve the opening and closing operation of the passages.

Moreover, it is also known that malfunctions of the pilot system may in the end occur, due to interruptions of the pilot flows for different reasons, such as failure of the feeding system (that may be even a compressor) or the servo control, or break of pipes, hoses or connection fittings conveying fluid to the servo control.

In any event, usually the least additional operative means are introduced in the valves the least are chances of occurrence of malfunctioning or breaking problems.

Finally, not all the valves of this kind have a total separation of fluids, which however may be a very relevant factor in some sectors. Indeed it is known that in the servo controlled valves, the processed fluid is often the same used for the servo control, unless the valve is externally servocontrolled, but in any case the total separation in the servocontrolled valves is generally difficult to be achieved, in view of their configuration.

For example, in presence of fluids containing material corrosive agents, when the valve has no total separation, or the movable core is in contact with the processed fluid, the part of electromechanical operation might become worn earlier with its consequent failure. Still with reference to the total fluid separation, in other sectors such as the food industry, the components must be compatible and certified for the processed edible fluid, and this obviously makes very strict the safety certifications. Other sectors where use of slide solenoid valves would be useful, but it is often precluded because of servocontrol problems and/or lack of total fluid separation, are the explosive environments.

As to the particular kind of directly controlled solenoid valves, it is well known that they have rather limited flow rates, and consequently the valve performances are limited by the flow rate and the small pressure attained by the processed fluid.

Therefore in this case, in order to increase the valve flow rate, it is necessary to supply greater feeding power to the coil, with consequent increase of energy consumption and related costs. Moreover in this kind of valves, a greater wear of seals, such as orifice, packings or gaskets, is particularly recurrent.

Also in this case, though existing and being used, not all the solenoid valves of this kind have a total separation. More particularly, for instance in a normally closed two-way solenoid valve, the operative pressure is dependent and proportional to the orifice diameter, so that the obtainable pressures are in any case limited and defined by the diameter of said orifice.

Moreover, in a two-way solenoid valve, the displacement of the movable core (moved by the coil actuation) usually corresponds to opening and closing an orifice. Therefore, if great flow rates are required, a large displacement of the movable core and a large orifice are required (large displacements correspond to large flow rates), thus a large displacement of the movable core is required, with a consequent increase of the coil power. Therefore it is clear that to have considerable flow rates, it is necessary to increase the coil power proportionally, with a consequent burdensome economic expenditure.

The problem of correlation between orifice diameter and valve power, i.e. flow rate and so on, was solved by the slide solenoid valves, in which the flow rate does not depend on the orifice, because their structure is different. In any case, the traditional directly controlled solenoid valves have to their advantage reduced overall dimensions relative to the servo controlled slide solenoid valves. Therefore apparently there is no adequate solution to combine the advantages of both kinds of valves, thus solving the above mentioned problems, which are now being solved by the present invention as it will be hereinafter illustrated.

Further examples of servo controlled valves or valves with pilot actuation, are disclosed in the following prior art documents like US 3369790 illustrating a servo controlled pneumatic slide valve, which through a pilot system actuates a lever working positively to amplify the solenoid force, where the sealing component is moved by a force equal to the solenoid force multiplied by the lever ratio, so that said valve has the force increase of the solenoid but has the drawbacks of the servocontrolled valves, namely considerable overall dimensions, no possibility of increasing the flow rate and moreover the valve implementation results to be very complex , as shown in its drawings, and more particularly to be actuated, requires an inlet pressure greater than 0 bar, requiring the existence in each servo controlled valve a command like including process fluid suitable for operating, or actuating the valve, this involving the need of a dedicated process fluid, thus causing the above mentioned related drawbacks.

Document US 2329254 discloses an electrically actuated valve for increasing the solenoid performance in said valve, the object being to have a more immediate control of the valve actuation, also servo controlled by a pilot system, although the object here is to increase performances with the aid of a lever increasing the solenoid force, as described in the previously discussed document; also in this case a substantially servo controlled valve is disclosed, with a complex implementation which requires, like in the previously discussed document, to be actuated with an inlet pressure higher than 0 bar.

Document US 2617444 also discloses a valve particularly adapted to work continuously at a high speed to control the pressure of the pressurized fluids. Said valve is servo controlled and comprises a pilot element , defined as essential for such invention, which is preferably actuated by a high speed electric device or proper command. For this device having a very particular object, a servo control pilot system is required. Therefore this valve, though dealing with different problems, has the same drawbacks of the previously discussed servocontrolled valves, affecting also the here cited documents.

Finally document US 3176516 discloses a mechanism comprising a valve with multi-gate selector and also a quick response piloted valve for being operated with devices for controlling gas pressure. According to the described embodiments (e.g. a control valve for a gas chromatograph) in any case said invention discloses piloted valves actuated by a servocontrol. Also in this document one can easily deduce that said valves have considerable overall dimensions, technical characteristics of the servo controlled valves, considerable complexity and actuation possible at a pressure over 0 bar, thus being further examples of the great technical applications of servo controlled valves, which however do not accomplish the objects of the present invention which will be hereinafter described. Furthermore, US3369790 shows a method for actuating a slide solenoid valve, said solenoid valve comprising at least one coil, a movable core, a fixed core, a valve body provided with: at least one slider and a plurality of fluid passages delimited by guides suitable for slidably housing said slider, an implementation system for direct control of said slide solenoid valve, and comprising elements suitable for the actuation of said solenoid valve.

A particularly relevant object of the present invention is to achieve a method for actuating a slide solenoid valve without a pilot system.

A further object of the present invention is to achieve a method for actuating a slide solenoid valve having reduced overall dimensions.

Another object of the present invention is to achieve a method for actuating a slide solenoid valve always allowing a total fluid separation.

Still another particularly relevant object of the present invention is to achieve a method for actuating a slide solenoid valve allowing, according to the kind of valve, to obtain greater flow rates and pressures in respect of the prior art, reducing the manufacturing costs and more particularly with reduced power used, combined with reduced dimensions of said slide solenoid valve.

Therefore it is an object of the present invention to achieve a method for actuating a slide solenoid valve which is simple to be used, constituted by simple basic structures and is economically advantageous relative to the actuation systems for prior art solenoid valves of the same kind.

Still an object of the present invention is to achieve a method for actuating a slide solenoid valve making said valve more resistant to wear, thus more reliable and durable, with consequent economic and performing advantages.

These and other objects will be achieved by a method for actuating a slide solenoid valve corresponding to claim 1.

In view of the dimensions of the lever arms, designed according to the manufacturing requirements, said lever multiplies and transfers the motion to the slide. Still in a particularly advantageous way, in view of this lever system, greater strokes of the slide are obtained with a limited stroke of the movable core.

It is also to be noted that in a very advantageous way, as illustrated in the accompanying drawings, some of the interacting components such as slide, O-ring and slide guides, cause the operative pressure be independent from diameter of any opening, like the orifice of a traditional valve; indeed for a lever actuated slide solenoid valve of the present invention, no orifice is being closed, but two ducts are put in communication, as it is known for slide valves, but in this case no servo control is required, with a considerable and advantageous reduction of the space required for installation of the innovative solenoid valve of the invention.

Furthermore, as one may see from the description of the annexed drawings, the activation system that will be implemented by at least a valve body comprising e.g. at least a slide, a plurality of O-rings, guides for the slide motion, allows to obtain a solenoid valve also characterized by the advantageous total fluid separation, through a seal between a first and a second chamber for fluid passage as described.

Still in a particularly advantageous way, in the implementation system for solenoid valves of the present invention, the electromagnet or coil moves at least a lever transmitting the motion to a slide; this innovative actuation system, obtained by the lever mechanism, makes possible to increase the passage width by the slide movement (the passages are identified in the annexed drawings) without requiring increase of the coil power, with consequent savings. It is to be pointed out that a particularly important and advantageous feature of the lever actuation system is to reduce the coil tension and increase the slide stroke, thus with a greater opening of the passages, causing an increase of the flow rate. Therefore it is clear that this is advantageously possible only with the contribution of the lever actuation system, since only the core stroke would not be sufficient for this purpose.

Consequently with said system it is possible to attain higher pressures and flow rates with a lower power, since in this case the motion of the movable core is always limited, and it is the lever system increasing the required movement.

More particularly, the described lever system is best applicable in the slide solenoid valves in view of the feature of said valves of the advantageous management of the operative pressures. Indeed up to now actuation of said valves occurred through a servocontrol or other kinds of direct control, as above discussed.

The here described implementation or actuation system by a lever mechanism allows to eliminate a servocontrol actuated by either external or process fluid, since said lever mechanism allows to have a sufficient slide displacement to open the passages using neither a servocontrol nor increased power. This is possible because the lever arm amplifies the stroke of the movable core toward the slide. It is clear that this system is very advantageous for both the servo controlled and the direct control system; as a matter of fact, it is well known that a servocontrolled system does not need an increased power (required for a direct control system) but can be actuated only with a pressure threshold over 0 bar, thus requiring a potential difference. On the contrary the direct control system operates even at 0 bar but requires higher power in order to have a stroke sufficient to open the passages required at the demanded flow rates. This implementation system with a lever mechanism allows to use the valve starting at 0 bar.

Still in a more advantageous way, the total fluid separation achieved by this actuation system, makes said slide solenoid valve very wear resistant and this obviously extends the average useful life of the valve with considerable advantages of safety and economic savings.

In view of the total fluid separation achieved by this actuation system, it is also possible to use the here described innovative composite solenoid valves (valve body and actuation system) in explosive environments, for instance provided with an appropriate explosion-proof case or special certified coils.

Moreover in a still more advantageous way the total fluid separation allows to use said solenoid valves in a much easier way in sectors where corresponding conformity certifications are required, such as the food industry which is a particularly interesting sector from the commercial point of view. In this sector the procedure of certification would be very simplified in view of the lower number of components contacted by the fluid.

These and other advantages achieved by the implementation system for slide solenoid valves described by the present invention in the above mentioned and other sectors, will be more apparent from the following detailed description of preferred embodiments, with reference to the accompanying drawings, in which:
Fig.1 is a schematic view of a preferred embodiment of the implementation system according to the present invention, with the solenoid valve body omitted;
Fig. 1a is a sectional view of a preferred embodiment of the implementation system for a directly controlled slide solenoid valve according to the present invention;
Fig. 1b and 1c show the same embodiment of Fig. 1a with activated and deactivated lever, respectively;
Fig. 2a is a sectional view of another embodiment of the implementation system provided with a solenoid valve according to the present invention, compared with a normally closed two-way solenoid valve shown in Fig. 2b;
Fig. 3a is a sectional view of an embodiment of the implementation system provided with a solenoid valve according to the present invention, compared with a normally open three-way solenoid valve shown in Fig. 3b; and
Fig. 4a is a sectional view of a further embodiment of the implementation system provided with slide solenoid valve according to the present invention, compared with a servocontrolled five-way slide solenoid valve shown in Fig. 4b.

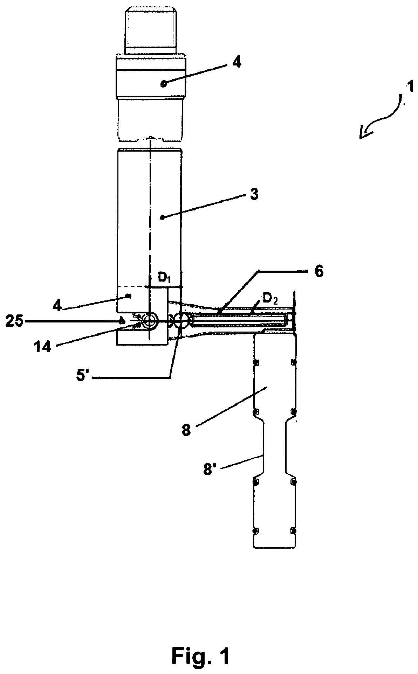

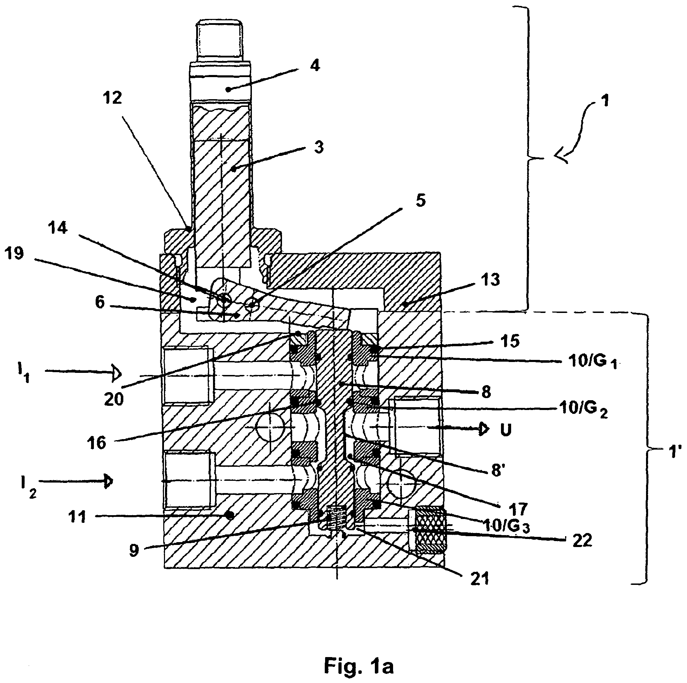

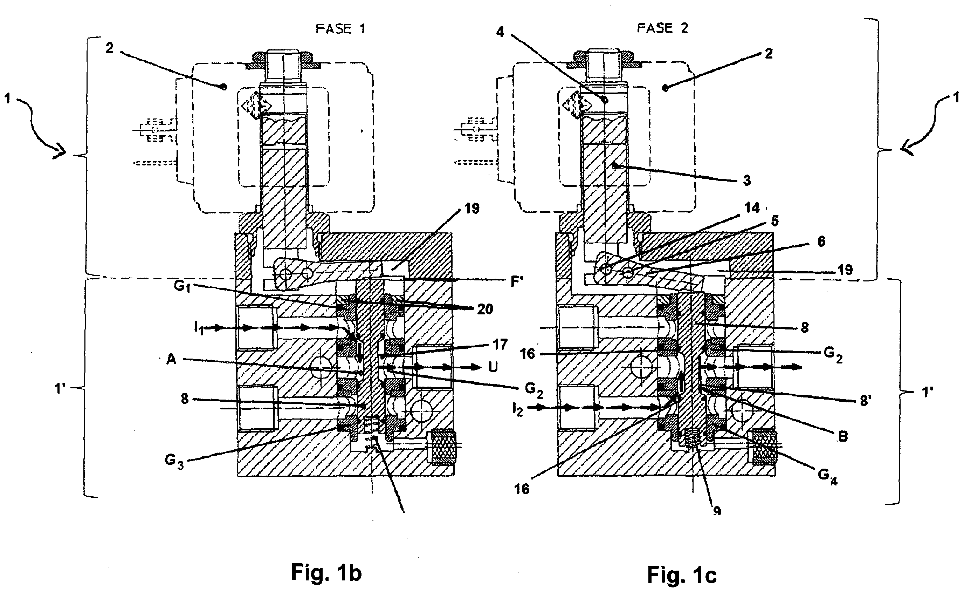

Now with particularly reference to Fig. 1, in which only a preferred embodiment of the implementation system 1 of the present invention is shown, it is to be noted that said system 1 comprises at least a group including a movable core 3 and a fixed core 4 coupled in the standard way; said movable core 3 may comprise an eyelet 25 housing a rotary pin 14 for connecting a fulcrum rod 5 with the movable core 3. Said fulcrum rod 5 is connected with a lever 6 at the fulcrum 5', which may act as a rotational constraint between rod 5 and lever 6. Distance D1 between constraint with movable core 3 and fulcrum 5' is here defined as lever arm. Lever 6 engages e.g. by bearing with subsequent pressure, slider 8 here shown extracted from the valve body (said lever 6 may also be hinged or constrained in any way adapted to exert a force on said slider 8). The arm between fulcrum 6 and one or more bearing points of said lever on said slider is defined as lever arm D2. The length ratio between said lever arms D1 and D2 will be defined from time to time according to the desired effect of the solenoid valve, in this case preferably, but not necessarily a slide solenoid valve, to which said implementation system 1 is being applied. More particularly it is to be noted that when the ratio D2/D1 < 1, then it is preferable to have a greater force exerted on slider 8, relative to the exerted lever arm, as to the width of displacement of slider, indicated also as slider stroke.

When on the contrary the ratio D2/D1 > 1, then the lever arm 6 exerts a smaller force on said slider 8, but the slider stroke is greater. When the one or the other condition is preferable, it will be discussed in detail hereinafter with reference to the various embodiments and applications illustrated below.

In Figures 1a,1b,1c a preferred embodiment of the present invention is illustrated. More particularly the integrated implementation system 1 comprises a three-way direct control solenoid valve 1', with a valve body 11 including a coil 2, a movable core 3, a fixed core 4, a sleeve 12, a cover 13 for protection of the valve body 11. Said movable core 3 is connected through a suitable member such as a pin 14, to a rod 5 of fulcrum 5' for a transmission lever 6. In the valve body 11 there is a slider 8 vertically sliding in passages of the body, defined by guides 10 for movement of said slider 8.

Said guides 10 consist of a single piece comprising a closed zone and a ring nut zone provided with holes, in Fig. 1 one can see for instance three elements G1, G2 and G3 constituting said guide 10. Moreover said guides comprise sealing O-rings 15 and said slider 8 comprises additional sealing O-rings 16, suitably constrained to said slider 8 and slidingly positioned at said passages X. At the end of said slider 8 opposite to the end interacting with lever 6, there is a return spring 9 for said slider 8. At the seat for said return spring 9 there is a pressure relief room 21 with related filter 22.

Said direct control slide solenoid valve 1, in this embodiment comprises two inlets I1, I2 and an outlet U, whose functions are described in Figs. 1b and 1c, in which the two operative stages of said direct control slide solenoid valve 1 are illustrated: in stage 1 of Fig. 1b, a pressurized fluid entering the inlet I1 of said solenoid valve 1, with the coil 2 not energized, goes out through outlet U. In said stage 1, return spring 9 is totally extended and acts on slider 8, which is kept in its final position F' by retainers 20 for packing guides for movement of slider 8, determining its stroke.

In stage 1, fluid passes through the chamber 17 housing slider 8, in the area where said slider 8 has a substantially cylindrical portion 8' of reduced diameter. Said passage area A is delimited between sliding guides (G1-G2) for said slider 8 and the relevant sealing O-rings 16 of slider 8 that are disposed at said guides (G1-G2) adhering with said O-rings 16, thus preventing outflow of fluid from said passage area A, so that the fluid remains confined within the area A of chamber 17.

At stage 2 (Fig. 1c) on energizing coil 2, the movable core 3 moves to the fixed core 4, which acting on pin 14 rotates transmission lever 6 on its fulcrum 5' with the fulcrum axis 5. On rotation said lever 6 transmits the motion acting on slider 8, and slider 8 moving downwands closes the passage to inlet I1, meanwhile opening the passage to inlet 12.

It is to be noted that said lever is suitably dimensioned according to the required lever arm, either with specially designed shapes or calibrated according to the required length; more particularly as mentioned for Fig. 1, lever arm length means the balance between fulcrum point 5' of axis 5 and the lever arms. The movable core acts on the first arm D1 through the connection means with said lever, e.g. said pin 14; the other arm D2 extending from fulcrum 5' to the lever length acting on the slider, transmits the lever force to the slider 8.

More particularly in an embodiment as shown in Figs. 1a-1c, the lever system will be preferably dimensioned as follows. In this case the slider 8 should be moved for a precise quantity which is greater than the stroke that the movable core 3 alone may carry out. Therefore in this case arm D1 of lever 6 should have a lower length than arm D2 of same lever 6: in this way the stroke of the movable core 3 is amplified and transferred to slider 8 which makes a movement proportional to the ratio of arms D2/D1 (ratio > 1). It is to be noted that this ratio D2/D1 > 1 is particularly adapted for three- or more way valves.

At this point the return spring 9 is packed and fluid may pass to portion B of chamber 17, where the reduced diameter part 8' of slider 8 is now located. The channel portion B is delimited by guides G2-G3 and O-rings 16 arranged on the slider 8 at points corresponding to said guides G2-G3, substantially close tightly the passage of liquid between slider 8 and guides G2-G3.

Once coil 2 is de-energized, return spring 9 arranged under slider 8 (or in any case in a position opposite to the action of lever 6) provides for resetting the initial position of slider 8. Therefore said slider 8 is returned to the starting position in which inlet I1 is in connection with outlet U and inlet I2 is closed. Obviously it is indifferent to invert the functions of inlets and outlets, and in such a case, there will be only one inlet I and two outlets U1 and U2, inverting the flow direction.

It is to be noted that advantageously, in the solenoid valve implemented by the here described innovative system, use of a command fluid is no more required, since use of the lever system arranged in chamber 19, allows to amplify strokes of the movable core, transferring them to the slider and there is a considerable incremental effect obtained by said lever 6. More particularly, the longer is the lever arm D2 and the higher will be the amplification of the core stroke, in other words the slider movement will be bigger.

In a normal slide valve, such a stroke would be achieved only by a servo control directly acting on the slider, with the above mentioned drawbacks related to servo controls; otherwise such a stroke would be obtained by a directly controlled solenoid valve without servo control, however using extremely high powers which are not convenient both from the economic and performance point of view.

It is to be noted that said chamber 19, belonging to the actuation system 1, is isolated from chamber 17 of slider 8, arranged in the valve body 11, this isolation occurring through the detent area of guides 10 and sealing O-rings, and in this case fluid in chamber 19 may be substantially air and in any case said chambers are advantageously isolated each other.

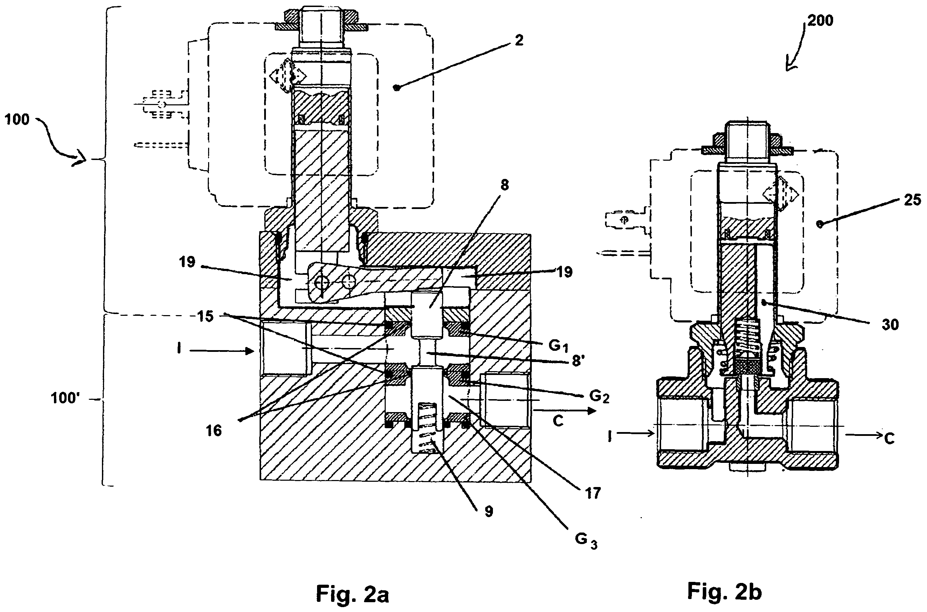

Figures 2a and 2b illustrate the substantial differences between the various kinds of prior art systems and the advantages of the solenoid valve implemented with the actuation system 1 according to the present invention in all its embodiments. Figure 2a shows a normally closed two-way slide solenoid valve 100 provided with an actuation system 1 by lever 6 of the present invention, compared with a prior art normally closed two-way solenoid valve. It is clearly apparent that also in this case advantageously, the actuation system comprising coil 2, movable core 3, lever 6, slider 8 is the same previously described with reference to Figure 1; in this case obviously the slide solenoid valve 100 of the present invention, being a normally closed two-way valve, has one inlet channel I and one outlet channel C which are not in communication when the coil 2 is not energized. In this case, when the coil 2 is energized, the movable core moves toward the fixed core 4 by rotating the lever 6 which in turn moves downwards and opens the communication channel between inlet I and outlet C. It is to be noted that even in this embodiment the slide solenoid valve 100 of the present invention advantageously operates in a condition of total fluid separation, in view of the division between chamber 17 of slider 8 and chamber 19 of lever 6.

Moreover, it has to be noted that in the present standard directly controlled two-way solenoid valve 200 ( here shows as normally closed for example only) coil 25 moves the movable core 30 with gasket 40 thus opening an orifice 50 communicating inlet I with outlet C. In this case it is clear that the operative pressure of said prior art solenoid valve 200 depends on the diameter of orifice 50 and this operative condition is particularly limiting the valve performances, that is the delivered flow rates relative to pressure, when compared with the power applied to the valve.

One of the objects achieved by the direct control slide solenoid valve 1,100 according to the present invention is indeed that it is possible to work starting from any pressure, without need that said solenoid valve is kept under pressure, and this obviously brings to considerable advantages from the applicative point of view. The same considerations of the technical advantages achieved, are applicable also to prior art normally open servo controlled two-way solenoid valves, obviously inverting the required controls.

Preferably in this case the actuation system 1 comprises a lever 6 of substantially longitudinal shape, wherein arm D1 may be substantially greater than arm D2, in order to amplify the force transmitted by lever 6 to slider 8, rather than amplifying the slider stroke, as in the previously discussed case. Therefore for two-way and/or directly controlled valves, use of a ratio of the arms (D2/D1) < 1 is generally useful. This ratio of the arms D1,D2 of lever 6 depends upon the intended object in operating the solenoid valve, which will be evaluated from time to time.

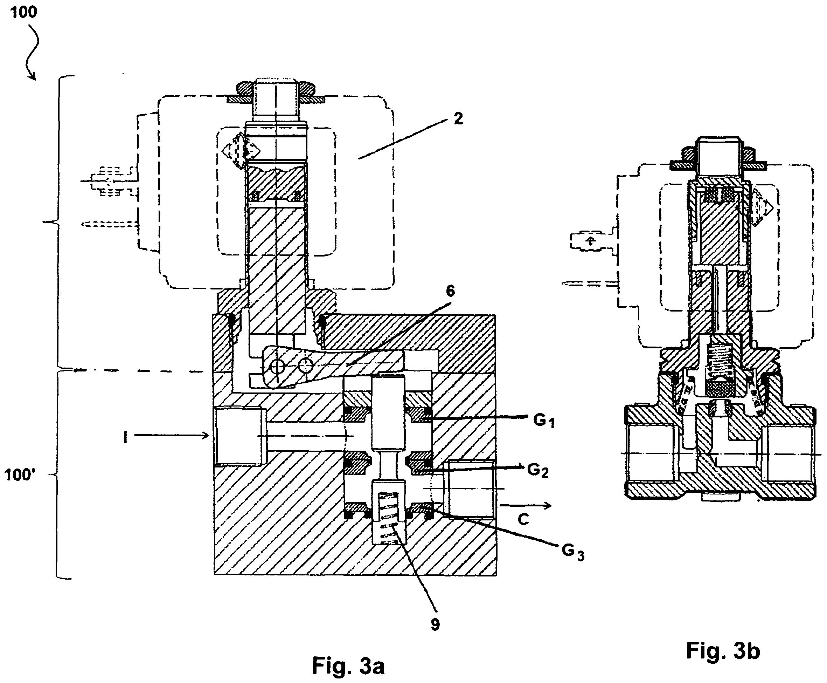

With reference now to Figures 3a and 3b, the same comparison is being illustrated between a normally open two-way solenoid valve 100" of Fig. 3a, provided with slider and lever and actuated by the implementation system 100 designed according to the present invention, and a traditional normally open two-way solenoid valve of Fig. 3b. In this case, the passages between inlet and outlet are open in the non-energized condition of coil 2, so that there is a direct passage between inlet I and outlet C of solenoid valve 100". Subsequently with the energized coil 2, the movable core 3 connected with lever 6 going down activates rotation of lever 6 around pin 14, so that lever 6 acts on slider 8 closing the passages and consequently the valve. Once coil 2 is de-activated, slider 8 returns to the starting position in view of the elastic return action exerted by spring 9 on said slider. Also in this case there is a total fluid separation and an incremental effect of said lever 6 on said slider, against a reduced movement of the movable core 3. In this case preferably the actuation system with lever 6 has a ratio between the arms generally of the kind (D2/D1) < 1.

It is also to be noted that it is possible to design said lever 6 with a structure having protrusions or recesses in said lever, in order to create a further bearing point for the slider. Such a supplementary bearing point is useful during movement. The lever initially pushes the slider against a determined support, then the slider moves to lean on the supplementary bearing point (and it will no more be in contact with the initial bearing point) which has an arm different from the starting one and further amplifies the core stroke. The prior art normally open solenoid valve is illustrated for a mere visual comparison, as it is clear at once to a man skilled in the art.

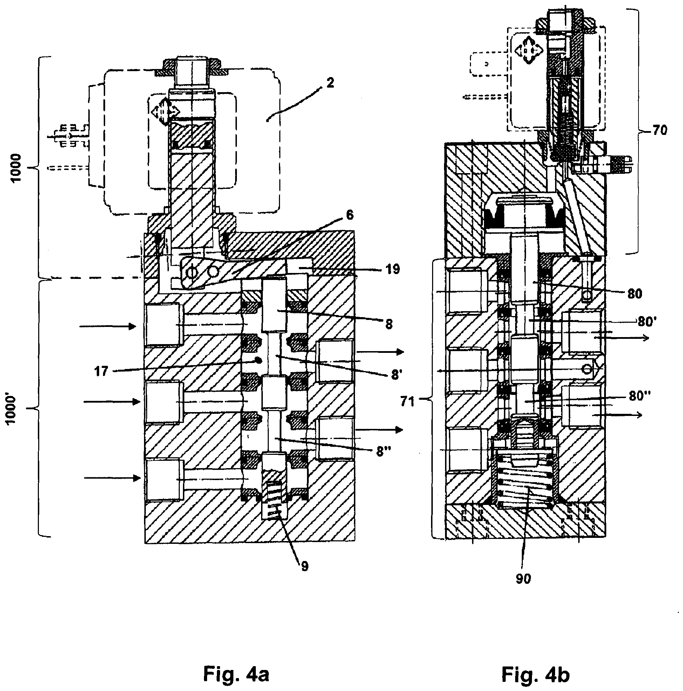

Again in Fig. 4a, a further embodiment and alternative application of the actuation system 1000 with lever 6 for slide solenoid valves according to the present invention is shown; in this case the activated solenoid valve 1000' is a five-way valve. It is to be noted that the present embodiment is only a further example, since as it is apparent said slide solenoid valve may be implemented in the normally closed or normally open form and substantially with any number of ways. It is clear that the essential components of the directly controlled slide solenoid valve in the here illustrated preferred embodiment 1000' is the same, namely there are substantially a valve body including at least a chamber 17, at least a guide 10 in turn including several elements G1-G5, and a slider 8, comprising in this particular case two reduced diameter areas 8', 8" for fluid passage. Obviously for each added element there are further additional elements like the above illustrated ones, such as another plurality of sealing O-rings 16 for the slider and another plurality of O-rings 15 for the elements G1-G5 of guide 10. The operation is obviously the same as previously described. Also in this case for the lever arms D1, D2, it is preferable the same ratio as described hereinbefore, namely (D2/D1) < 1 for the above mentioned reasons.

Again for a merely visual comparison, in Fig. 4b as an example a prior art servo controlled five-way slide solenoid valve is shown, which is the closest prior art with regard to the present invention. Such servo controlled slide solenoid valve has a servo control 70 which has considerable dimensions relative to the valve body 71. In this case one can also see that the command liquid is not isolated from the valve processed liquid, so that there is no fluid separation (even if it were, the above mentioned problems still remain unsolved). As to the elements constituting the valve body 71, the components are substantially similar.

Thus it appears further advantageous that said innovative mechanism may be used also with already known valve bodies, only with some small modifications, and this aspect is decidedly advantageous since it allows to further reduce the productions costs, because it is not necessary to prepare totally different manufacturing lines, but only to add some parts for the innovative system.

More particularly it should be noted that in said actuation system with lever 6, it is possible to increase the lever effect in one or more variations of the preferred embodiments, by designing the lever with a special form, for instance making steps, grooves or any other form adapted to create supplementary supports.

More particularly the lever, when actuated and rotated, initially pushes the slider up to a determined point, and thereafter with continued rotation the lever will push the slider with the especially created supplementary support (step, groove, etc.): in this way the lever arm varies according to the distance between said support point and the fulcrum, so that the movement will be advantageously amplified. Motion attenuation is known from the above discussed prior art documents.

Furthermore, in another preferred embodiment, the lever fulcrum may be varied at any operation moment. This allows to have a variation of the arms D1 (core-fulcrum) and D2 (fulcrum-slider) with time, thus varying dynamically the ratio D2/D1 and further amplifying the movement. The increase of force is known from the above discussed prior art documents.

The variable fulcrum may be obtained for instance in such a way that the fulcrum rod is not completely constrained to the lever; for instance the rod seat on the lever may also be a slot instead of a hole (or there may be a transversal and/or longitudinal backlash between hole and rod). In this way the lever slides during the operation causing the fulcrum position to be changed.

In a further advantageous alternative embodiment the lever is not provided with a fulcrum rod. The fulcrum, considered as center of rotation of the rod, is given by the bearing of the lever on the cover or the body or any other point. By the provision of several bearing points to the lever, it is possible to change the fulcrum during the lever movement.

Clearly it is also possible to carry out the lever actuation system by connecting movable core, lever and slider in a different way. For instance it is possible to hinge core with lever and lever with slider, or to connect the movable core with elastic elements with the lever, and so forth.

Finally, in view of the great number of advantageous and performing embodiments of the lever actuation system of the present invention, it is possible to carry out said actuation system on elements other than the slider. For instance a possible embodiment consists in carrying out the lever actuation according to one of the previously described embodiments, but this actuation is applied for instance to a gasket, gland, membrane or any other member providing for closing / opening fluid passages or orifices.

In any case it is clear that these and other preferred embodiments of the present invention, describing an actuation system for direct control slide solenoid valves, allowing the total fluid separation, and combining the advantages of little dimensions of the normal direct control solenoid valves with the considerable advantages of increased flow rate of a servo controlled slide solenoid valve, may be applied to any embodiment of solenoid valves such as normally open two-way, normally open three-way, normally closed three-way solenoid valves and so on.

The foregoing are only some of the preferred and possible embodiments of a method for actuating a slide solenoid valve according to the present invention, further variations in which the system elements are coupled in different ways like opposition, engagement, fixing of the elements acting as lever, fulcrum, rods, or the sealing elements such as O-rings and the like may have alternative forms or positions, as well as alternative forms of the slider, but in any case all being suitable for the objects of the present invention, or materials of any kind or any other modification falling within the object of the invention, should be considered as embodiments alternative to the previously described preferred embodiments, in which modifications and changes concerning for instance the geometries chosen for the individual mobile and fixed elements, the materials adapted for any member, and even the specifications of the actuation systems, may be resorted to if not thereby departing however from the scope of protection of the present invention as defined in the appended claims.

## Claims

1. A method for actuating a slide solenoid valve,
said solenoid valve comprising
- at least one coil (2),
- a movable core (3),
- a fixed core (4),
- a valve body (11) provided with:
- at least one slider (8) and
- a plurality of fluid passages delimited by guides (10) suitable for slidably housing said slider (8),
- an implementation system (1,100,1000) for direct control of said slide solenoid valve, and comprising elements suitable for the actuation of said solenoid valve (1', 100', 1000') wherein:
- said system is actuated starting from pressures of 0 bar allowing at the same time opening of said fluid passages,
- said actuation elements comprise:
- at least a lever (6) connected to said movable core (3) at a pin (14), and
- a fulcrum (5') for said lever (6),
- said movable core (3) is activated by said coil (2) acting via said fulcrum (5') on said lever (6),
- said lever (6) is adapted to amplify the stroke of said movable core (3), acting consequently on said slider (8) to cause said slider (8) to effect a movement equal to the movement of said movable core (3) multiplied by a determined lever ratio,
- said slider (8) slidably opens and closes the inlets or outlets of said solenoid valve (1 ', 100', 1000 ') still maintaining reduced powers.

2. A method according to claim (1) wherein said lever (6) has arms (D1) and (D2) dimensioned so that the lever ratio is (D2/D1)> 1 for which the distance (D1) between the fulcrum (5') and the pin (14) of the movable core, , is smaller than the distance (D2) between the fulcrum (5') and the support of the slider to amplify the movement of the slider (8) in three or more way valves.

3. A method according to claim 1, wherein said lever (6) has arms (D1) and (D2) dimensioned so that the lever ratio (D2/D1) <1 for which the distance (D1) between the fulcrum (5') and the pin (14) of the movable core, , is greater than the distance (D2) between the fulcrum (5') and the support of the slider to amplify the thrust force on the slider on two-way valves and/or direct command.

4. A method according to claim 1, wherein said lever (6) comprises one or more steps, or grooves, or protrusions such that it creates a second point of support on which any of the moving parts which are the movable core (3), the slider (8) or the lever (6) itself, may lean stationary or during movement.

5. A method according to claim 4, wherein said second support point generates an amplification of the movement or of the force of the lever (6) depending on the lever arm (D1) or (D2) created in a variable manner during the movement.

6. A method according to claim 1, wherein a rod (5) of the fulcrum (5') has longitudinal or transverse play in the engagement zone for which the fulcrum has a variable position, corresponding to a variation of the length of the arms (D1) (D2) during the implementation of the system.

7. A method according to the preceding claims, wherein said system (1,100.1000) comprises more levers (6) to transfer and/or amplify the force of the movable core (3) to which they are connected.

8. 9. A method according to the preceding claims, wherein said lever (6) acts on said slider (8) by connection means such as pivoting, hinging, elastic means and the like equivalent means.

## Patentansprüche

1. Implementierungssystem für verschiebbare Magnetventile, worin das Magnetventil enthält:
- mindestens eine Spule (2),
- einen beweglichen Kern (3),
- einen festen Kern (4),
- einen Ventilkörper (11) enthaltend:
- mindestens einen Schieber (8) und
- mehrere Durchlässe, die Führungen (10) für die Schiebelagerung des Schiebers (8) haben,
- ein Implementierungssystem (1, 100, 1000) für die direkte Steuerung des verschiebbaren Magnetventils, das Elemente für die Steuerung des besagten Magnetventils (1', 100', 1000') aufweist;
Worin:
- Dieses System wird aus einem Druck von 0 Bar betätigt, mit gleichzeitiger Öffnung der besagten Durchlässe, und
- Die Steuerungselemente enthalten:
- Mindestens einen mit dem besagten beweglichen Kern (3) durch einen Zapfen (14) verbundenen Hebel (6), und
- Einen Drehpunkt (5') für den besagten Hebel (6),
- Der bewegliche Kern (3) wird von der Spule (2) durch den Drehpunkt (5') auf den Hebel (6) betätigt,
- Der besagte Hebel (6) ist geeignet, um den Hub des beweglichen Kerns zu verstärken, demzufolge mit Betätigung auf den Schieber (8), der eine Bewegung macht, die der mit einem Hebelverhältnis übersetzten Bewegung des beweglichen Kerns (3) entspricht,
- Der besagte Schieber (8) öffnet und schliesst fliessend die Einlässe und Auslässe des Magnetventils (1', 100', 1000'), doch mit Erhaltung von verminderter Leistung.

2. Implementierungssystem nach Anspruch 1, worin der Hebel (6) Arme (D1) und (D2) hat, die so bemessen sind, dass das Hebelverhältnis (D2/D1) >1 ist, daher der Abstand (D1) zwischen dem Drehpunkt (5') und dem Zapfen (14) des beweglichen Kerns niedriger als der Abstand (D2) zwischen dem Drehpunkt (5') und der Halterung des Schiebers (8) ist, um die Bewegung des Schiebers (8) in Drei- bzw.mehrwegeventile zu verstärken.

3. Implementierungssystem nach Anspruch 1, worin der Hebel (6) Arme (D1) und (D2)hat, die so bemessen sind, dass das Hebelverhältnis (D2/D1) <1 ist, daher der Abstand (D1) zwischen dem Drehpunkt (5') und dem Zapfen (14) des beweglichen Kerns höher als der Abstand (D2) zwischen dem Drehpunkt (5') und der Halterung des Schiebers (8) ist, um die Schubkraft auf den Schieber in Zweiwege- und/oder Direktantriebventile zu verstärken.

4. Implementierungssystem nach Anspruch 1, worin der Hebel (6) einen bzw. mehrere Absätze, Nuten, Vorsprünge aufweist, um eine zweite Halterung zu erhalten, woran eine beweglicher Teil, wie der bewegliche Kern (3), der Schieber (8) bzw. der Hebel (6) entweder still oder beweglich anlehnen kann.

5. Implementierungssystem nach Anspruch 4, worin die zweite Halterung die Bewegung bzw. die Kraft des Hebels (6) verstärkt, in Verbindung mit dem Arm (D1) oder (D2), der veränderlich während der Bewegung hergestellt wurde.

6. Implementierungssystem nach Anspruch 1, worin eine Stange (5) des Drehpunktes (5') ein Längs-bzw. Querspiel aufweist, im Verbindungsbereich wo der Drehpunkt eine veränderliche Stellung hat, entsprechend einer Änderung der Länge der Arme (D1) (D2) während der Implementierung des Systems.

7. Implementierungssystem nach den vorhergehenden Ansprüche, worin das System (1, 100, 1000) mehrere Hebel aufweist, um die Kraft des verbundenen beweglichen Kerns (3) zu übertragen und/oder zu verstärken.

8. Implementierungssystem nach den vorhergehenden Ansprüche, worin der Hebel (6) auf den Schieber (8) durch Verbindungsmittel, wie Verbolzungsmittel, drehbare, elastische und ähnliche gleichwertige Mittel einwirkt.

## Revendications

1. Système de mise en œuvre pour électrovannes à tiroir, comprenant:
- au moins une bobine (2),
- un noyau mobile (3),
- un noyau fixe (4),
- un corps de vanne (11) ayant :
- au moins un tiroir (8) et
- une pluralité des passages du fluide, délimités par des guides (10) pour le logement coulissant du tiroir (8),
- un système de mise en œuvre (1, 100, 1000) pour le contrôle direct de ladite électrovanne, et comprenant éléments aptes pour l'actionnement de ladite électrovanne (1', 100', 1000') ;
Dont
- Ledit système est actionné à partir des pressions de 0 bar, permettant en même temps l'ouverture de dits passages du fluide,
- Lesdits éléments d'actionnement comprenant :
- Au moins un levier (6) connecté avec ledit noyau mobile (3) par un pivot (14),
- Et un point d'appui (5') pour ledit levier (6),
- Ledit noyau mobile (3) étant activé par ladite bobine (2) avec l'action dudit point d'appui (5') sur ledit levier (6),
- Ledit levier (6) étant apte pour amplifier la course dudit noyau mobile (3), en agissant par conséquent sur ledit tiroir (8), de sorte que le tiroir (8) fait un mouvement égal au mouvement dudit noyau mobile (3) multiplié par un rapport de levier déterminé,
- Ledit tiroir (8) ouvre et ferme en coulissant les entrées ou sorties de ladite électrovanne (1', 100', 1000'), mais en maintenant des puissances réduites.

2. Système selon la revendication 1, dont ledit levier (6) a des bras (D1) et (D2) dimensionnés de sorte que le rapport de levier ((D2/D1) est >1, pour lequel la distance (D1) entre le point d'appui (5') et le pivot (14) du noyau mobile est inférieure à la distance (D2) entre le point d'appui (5') et le support du tiroir, pour amplifier le mouvement du tiroir (8) dans des vannes à trois ou plusieurs voies.

3. Système selon la revendication 1, dont ledit levier (6) a des bras (D1) et (D2) dimensionnés de sorte que le rapport de levier (D2/D1) est <1, pour lequel la distance (D1) entre le point d'appui (5') et le pivot (14) du noyau mobile est supérieure à la distance (D2) entre le point d'appui (5') et le support du tiroir, pour amplifier la force de poussée sur le tiroir dans des vannes à deux voies ou à commande directe.

4. Système selon la revendication 1, dont ledit levier (6) comprend un ou plusieurs gradins ou rainures ou saillies, pour produire un deuxième point de support, sur lequel chaque partie mobile, telle que le noyau mobile (3), le tiroir (8) ou le même levier (6), peut s'appuyer stationnaire ou en mouvement.

5. Système selon la revendication 4, dont ledit deuxième point de support produit une amplification du mouvement ou de la force du levier (6), selon le bras (D1) ou (D2) variable produit pendant le mouvement.

6. Système selon la revendication 1, dont une tige (5) du point d'appui (5') a un jeu longitudinal ou transversal dans la zone d'engagement, pour lequel le point d'appui a une position variable correspondante à une variation de la longueur des bras (D1, D2) pendant l'implémentation du système.

7. Système selon les revendications précédentes, dont ledit système (1, 100, 1000) comprend plusieurs leviers (6) pour transférer et/ou amplifier la force du noyau mobile (3) auquel ils sont connectés.

8. Système selon les revendications précédentes, dont ledit levier (6) fonctionne sur ledit tiroir (8) par moyens de connexion, tels que moyens de pivotement, encharnement, élastiques ou équivalents.
